## Europäisches Patentamt
## European Patent Office
## Office européen des brevets

(11) Veröffentlichungsnummer: **0 121 919**
**A2**

(12) # EUROPÄISCHE PATENTANMELDUNG

(21) Anmeldenummer: **84103916.7**

(51) Int. Cl.³: **C 09 J 5/00**

(22) Anmeldetag: **07.04.84**

(30) Priorität: 08.04.83 DE 3312644
04.07.83 DE 3324049

(43) Veröffentlichungstag der Anmeldung: **17.10.84**
**Patentblatt 84/42**

(84) Benannte Vertragsstaaten: **DE FR GB IT SE**

(71) Anmelder: **Henschke, Siefried,**
**Kurt-Schumacher-Strasse 172, D-5042 Erftstadt 12 (DE)**
Anmelder: **Piate, Rudolf, Rochusstrasse 73,**
**D-5300 Bonn 1 (DE)**

(72) Erfinder: **Henschke, Siefried,**
**Kurt-Schumacher-Strasse 172, D-5042 Erftstadt 12 (DE)**
Erfinder: **Piate, Rudolf, Rochusstrasse 73,**
**D-5300 Bonn 1 (DE)**

(74) Vertreter: **Leineweber, Jürgen, Dipl.-Phys., Bonner**
**Strasse 504 Postfach 51 07 60, D-5000 Köln 51 (DE)**

(54) **Verfahren zur Ausrüstung eines Bauteiles mit einer Schicht.**

(57) Bei der Ausrüstung von Bauteilen, z.B. bei der Herstellung von Kraftfahrzeugen, mit magnetisierbares Material enthaltenden Schichten (2) oder Formteilen (7) wird vorgeschlagen, die Magnetisierung erst unmittelbar vor dem Aufbringen der Schicht oder des Formteiles auf das Bauteil vorzunehmen, um optimale Magnetkräfte bei einem Minimum am Magnetisierungsaufwand erzeugen zu können.

- / -

Verfahren zur Ausrüstung eines Bauteiles

mit einer Schicht

Die Erfindung bezieht sich auf ein Verfahren zur Ausrüstung eines Bauteiles mit einer magnetisierbares Material enthaltenden Schicht. Außerdem bezieht sich die Erfindung auf eine Schicht und eine Magnetisierungsvorrichtung zur Verwendung bei diesem Verfahren.

Auf vielen Gebieten der Technik ist es erforderlich, Bauteile - seien sie eben oder gekrümmt - aus den verschiedensten Gründen mit einer für lange Zeit sicher haftenden Schicht auszurüsten. Ein häufiger Zweck ist zum Beispiel das Entdröhnen oder Versteifen von Bauteilen bei der Herstellung von Kraftfahrzeugen (Türen, Hauben, Dachflächen o.dgl.), Haushaltsgeräten, Kompressoren oder ähnlichen Maschinen. Darüber hinaus soll häufig auch noch eine Verbesserung der Luftschalldämmung erreicht werden. Gerade im Zuge des generellen Bedürfnisses nach Material- und Gewichtsersparnissen durch die Wahl relativ dünner Wandungen kommt der Entdröhnungs- und Versteifungstechnik immer größere Bedeutung zu. Die auf das Bauteil aufzubringen Schichten können aber auch Verkleidungs- oder Dekorschichten sein, die das Bauteil z.B. vollständig abdecken. Auch mehrere separate, nebeneinander auf ein Bauteil aufzubringende Schichtabschnitte sollen unter dem Begriff Schicht zu verstehen sein.

- -

Bei der Kraftfahrzeugherstellung ist folgendes bekannt:
Eine mit einer Heißkleberschicht ausgerüstete Entdröhnungs-
und/oder Versteifungsschicht, die üblicherweise wenige
Milimeter stark ist (im Fachjargon häufig Folie genannt),
wird mit ihrer Heißkleberschicht auf das zu entdröhnende
und/oder zu versteifende Bauteil gelegt. Danach wird
die Klebeverbindung durch Wärmeeinwirkung (z.B. in einem
der Lacktrocknung dienenden Ofen) hergestellt. Nachteilig
an diesem Verfahren ist, daß die mit der Folie auszurüstenden Bauteile während der Herstellung der Klebeverbindung eine weitgehend horizontale Lage haben müssen, damit
sie die gewünschte Lage beibehalten. Diese Forderung paßt
häufig nicht in die Organisation des Kfz-Herstellungsprozesses.

Zur Vermeidung dieses Nachteils hat man vorgeschlagen, die
Folie bzw. Schicht mit magnetisierbarem Material zu füllen
und dieses Material während des Herstellungsprozesses
der Folien zu magnetisieren. Folien dieser Art können für
eine begrenzte Zeit auch auf vertikal oder überkopf angeordneten Blechwandungen durch ihre Magnetkraft gehaltert
werden. Mit einer Heißkleberschicht ausgerüstete magnetisierte Folien können deshalb nach der Fertigmontage auf
die einzelnen Bauteile - unabhängig von deren Lage - aufgebracht werden. Die Herstellung der Klebeverbindung erfolgt
z.B. während der anschließenden Lacktrocknung im zugehörigen
Ofen.

Nachteilig an dieser Verfahrensweise ist, daß die Magnetisierung der Schichten bzw. Folien zeitlich begrenzt ist.
Eine Ursache dafür ist die notwendige Lagerung der Folien
in Stapeln. Wegen der unmittelbaren Nähe der Vielzahl der
Schichten zueinander beeinträchtigen sich die erzeugten Magnetfelder gegenseitig und verlieren dadurch relativ schnell ihre ursprüngliche Stärke. Die magnetisierten Folien können deshalb nur für eine bestimmte Zeit die gewünschte Funktion des Haftens auf dem jeweiligen Bauteil aufgrund ihrer Magnetkraft bis zur Herstellung der Klebeverbindung sicher erfüllen. Danach ist diese Funktion gefährdet. Diese Gefahr besteht insbesondere bei der Verwendung von Stapelresten, auf die zeitweise neue Stapel aufgesetzt wurden. Solche Stapel werden immer wieder von oben nach unten abgebaut, so daß die unteren Schichten häufig erst nach sehr langer Lagerung zur Verwendung gelangen.

Weiterhin ist der Magnetismus hitzeempfindlich. Wenn die Magnetisierung einer Schicht ohnehin schon nicht mehr stark ist, dann kann der zusätzliche Magnetkraft-Verlust im Lacktrocknungsofen dazu führen, daß sie sich von ihrer Unterlage löst, bevor die Klebeverbindung hergestellt ist. Aufwendige und kostspielige Nacharbeiten sind dann erforderlich.

Der vorliegenden Erfindung liegt die Aufgabe zugrunde, ein Verfahren zur Ausrüstung eines Bauteiles mit einer magnetisierbares Material enthaltenden Schicht anzugeben, dem die geschilderten Nachteile nicht mehr anhaften.

Erfindungsgemäß wird diese Aufgabe dadurch gelöst, daß das magnetisierbare Material unmittelbar vor dem Aufbringen der Schicht auf das Bauteil magnetisiert wird. Infolge dieser unmittelbar am Ort der Verwendung vorgenommenen Magnetisierung der Schicht ergibt sich der Vorteil, daß die Magnetisierung stets "frisch" ist und damit eine sichere Haftung bis zur sich anschließenden Herstellung der Klebe-

- 4 -

verbindung gewährleistet ist. Die Magnetisierung der
Schichten, Folien u.dgl. "vor Ort" kann statisch, d.h.
z.B. durch Auflegen der Schicht auf eine ein Magnetfeld
erzeugende Polfläche oder dynamisch, d.h. durch Bewegen
der Folie durch ein Magnetfeld hindurch, erfolgen. Eine
optimale Magnetisierung des in der Schicht enthaltenen
magnetisierbaren Materials und damit die Erzeugung möglichst großer Magnetkräfte bei einem Minimum an Magnetisierungsaufwand ist gewährleistet. Vom Zeitpunkt der
Magnetisierung bis zum sich unmittelbar anschließenden
Aufbringen der Schicht auf das jeweilige Bauteil tritt
eine Abschwächung dieser Magnetkräfte nicht ein.

Infolge dieser optimalen Erzeugung der Magnetkräfte kann
die Menge des in der Schicht befindlichen magnetisierbaren Materials geringer als bisher sein, so daß weiterhin eine Materialkosteneinsparung erzielbar ist. Eine
geringere Menge magnetisierbares Material in der Schicht
hat außerdem noch ein schnelleres Abklingen des Magnetismus nach der Herstellung der Klebeverbindung zur Folge.
Ein möglicherweise störender Einfluß der Magnetfelder
auf den Radioempfang im Fahrzeug ist dann bereits nach
relativ kurzer Zeit wieder verschwunden.

Eine zweckmäßige Einrichtung zur Erzeugung eines Magnetfeldes
zur Magnetisierung des in den Schichten enthaltenen magnetisierbaren Materials ist z.B. ein Magnettisch, wie er

aus der Magnetspanntechnik bekannt ist. Solche Einrichtungen haben eine Oberfläche mit einer Vielzahl entgegengerichteter Pole, die durch nichtmagnetisches Material abgegrenzt sind. Die Erzeugung der Magnetfelder im Bereich der Polfläche erfolgt entweder permanentmagnetisch, z.B. durch relatives Verschieben von zwei Permanentmagnetsystemen oder elektromagnetisch. Wird eine magnetisierbares Material enthaltende Schicht oder Folie auf eine solche Oberfläche gelegt, dann ist dieses Material nach kurzer Zeit magnetisiert.

Die Magnetisierung erfolgt umso schneller und sicherer, je geringer der Abstand des magnetisierbaren Materials von der Polfläche des Magnettisches ist. Deshalb ist eine Konzentration des magnetisierbaren Materials auf derjenigen Seite der Schicht, mit der sie auf die Polfläche gelegt wird, zweckmäßig. Diese Eigenschaft hat eine Schicht, die mit einer das magnetisierbare Material enthaltenden Folie kaschiert ist.

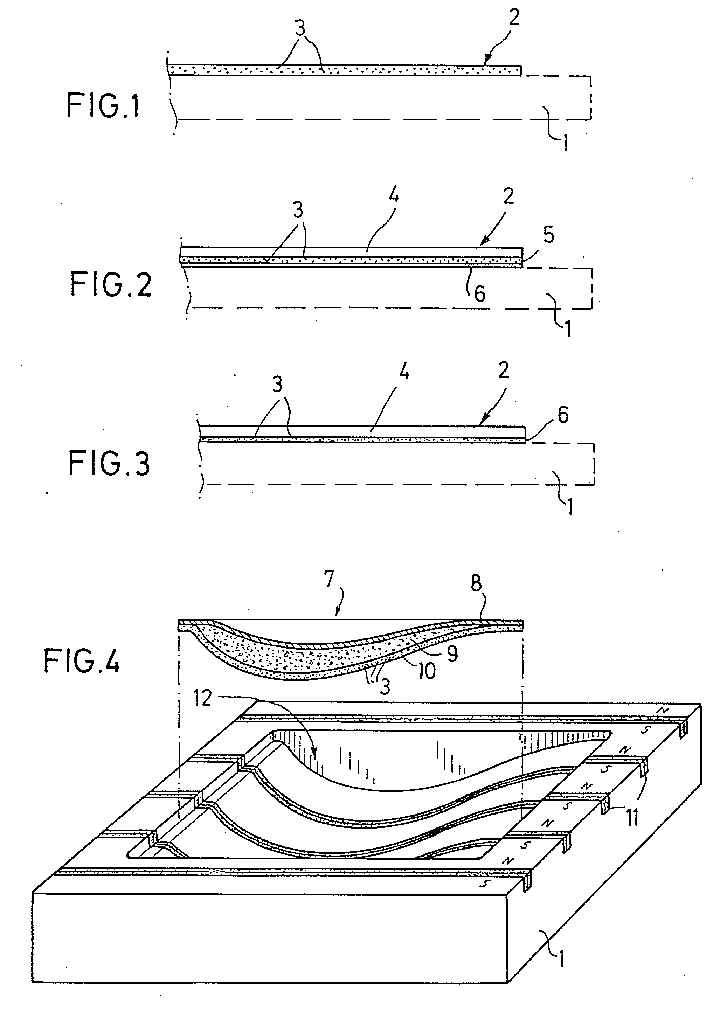

Die beiliegenden Figuren 1, 2 und 3 zeigen auf einem gestrichelt angedeuteten Magnettisch 1 liegende Schichten bzw. Folien 2. Der Magnettisch 1 steht jeweils unmittelbar "vor Ort", d.h. dort, wo unmittelbar anschließend die jeweiligen magnetisierten Schichten 2 verwendet werden, also auf ein vorzugsweise ferromagnetisches Material enthaltendes Bauteil aufzubringen sind.

Figur 1 zeigt als Beispiel eine bitumenhaltige Schicht 2, wie sie zum Zwecke des Entdröhnens von Blechwandungen bekannt sind. Das magnetisierbare Material 3 ist gleichmäßig in
der Schicht 2 verteilt. Nach der Magnetisierung des
Materials 3 wird die Schicht 2 auf die zu entdröhnende
Blechwand aufgebracht. Sollte sie nach dem Auflegen nicht
ihre richtige Position haben, dann ist es ohne weiteres
möglich, sie unter Überwindung der Magnetkräfte abzulösen
und in richtiger Position wieder aufzubringen. Zur anschließenden Herstellung der Klebeverbindung werden die
Schicht 2 und die Blechwandung erwärmt. Das Bitumen selbst
hat die Eigenschaft eines Heißklebers, so daß nach dem
Erkalten die Klebeverbindung hergestellt ist.

Beim Ausführungsbeispiel nach Figur 2 umfaßt die Schicht 2
eine äußere Lage 4, die die jeweils gewünschte Eigenschaft
(Entdröhnungs-, Versteifungs-, Dekorschicht o.dgl.) hat.
Auf diese ist die Folie 5 kaschiert, in der das magnetisierbare Material konzentriert ist und die nach dem Auflegen
auf den Magnettisch 1 in unmittelbarer Nähe der Oberfläche
dieses Tisches liegt. Zwischen der Folie 5 und der Oberfläche des Magnettisches 1 befindet sich lediglich die
relativ dünne Heißkleberschicht 6, die der anschließenden
Herstellung der Klebeverbindung dient.

Figur 3 zeigt eine weitere Variante für eine bei dem erfindungsgemäßen Verfahren verwendbare Schicht 2. Sie besteht
aus der Lage 4 mit der jeweils gewünschten Eigenschaft und
der Heißkleberschicht 6. Gegenüber den Ausführungsbeispielen
nach den Figuren 1 und 2 unterschiedlich ist, daß sich das
magnetisierbare Material 3 in der Heißkleberschicht 6 befindet. Dadurch liegt das magnetisierbare Material in unmittelbarer Nähe der einen Oberfläche der Schicht 2.

Figur 4 zeigt ein im Schnitt dargestelltes Formteil 7,
das eine von der Ebene abweichende, einem damit auszurüstenden
Bauteil angepaßte Form hat, sowie einen Magnettisch 1 mit einer
an das Formteil angepaßten Oberfläche. Das Formteil besteht
aus einer oberen Folie 8, die ein Formstück 9 aus Schaum oder
getränktem und gehärtetem Vlies abdeckt. Die Unterseite des
Formstückes 9 ist mit einer magnetisierbares Material 3 enthaltenden Folie 10 ausgerüstet.

Die Oberfläche des Magnettisches 1, auf welcher die verschiedenen Pole 11 sichtbar sind, weist eine der Form des
Formteiles 7 entsprechende Vertiefung 12 auf. Zur Magnetisierung wird das Formteil 7 derart in die Vertiefung 12 gelegt, daß die Folie 10 mit dem magnetisierbaren Material 3
den Polen 11 unmittelbar aufliegt. Nach der Magnetisierung
wird das Formteil auf das damit auszurüstende Bauteil aufgebracht. Auch dort liegt die Folie 10 mit dem magnetisierbaren Material 3 seiner Unterlage unmittelbar an, so daß
die Magnetkräfte voll wirksam werden. Selbst wenn das Formteil dem Bauteil wegen Formtoleranzen nur in Teilbereichen
anliegen sollte, dann ist wegen der während der Herstellung
der Klebeverbindung wirkenden Magnetkräfte eine vollflächige
Verbindung zwischen Bauteil und Formteil 7 sichergestellt,
da sich das Formteil 7 während der Wärmeeinwirkung durch
die Wirkung der Magnetkräfte der exakten Form des Bauteiles
anpaßt.

Formteile der beschriebenen Art erfüllen - wenn sie erfindungsgemäß aufgebracht werden - in besonderem Maße ihren
Zweck. Wegen ihrer vollflächigen Verbindung mit dem damit
auszurüstenden Bauteil sind eine besonders gute entdröhnende,
versteifende und luftschalldämmende Wirkung gewährleistet.

Verfahren zur Ausrüstung eines Bauteiles

mit einer Schicht

1) Verfahren zur Ausrüstung eines Bauteiles mit einer magnetisierbares Material enthaltenden Schicht, dadurch gekennzeichnet, daß das magnetisierbare Material unmittelbar vor dem Aufbringen der Schicht (2) magnetisiert wird.

2) Verfahren nach Anspruch 1, dadurch gekennzeichnet, daß die Magnetisierung statisch oder dynamisch erfolgt.

3) Verfahren nach Anspruch 1 oder 2, dadurch gekennzeichnet, daß die Schicht (2) unmittelbar vor dem Aufbringen auf das Bauteil auf die Oberfläche einer Einrichtung (1) für die Erzeugung eines Magnetfeldes gelegt wird.

4) Verfahren nach Anspruch 3, dadurch gekennzeichnet, daß ein an sich bekannter Magnettisch (1) verwendet wird oder daß die Schicht (2) unmittelbar vor dem Aufbringen auf das Bauteil auf einem Band oder dgl. durch ein Magnetfeld bewegt wird.

5) Verfahren zur Ausrüstung eines eisenhaltigen Bauteiles mit einer magnetisierbares Material enthaltenden Schicht, indem das magnetisierbare Material magnetisiert wird, die Schicht auf das Bauteil aufgebracht und durch die Magnetkraft gehaltert wird und anschließend durch

- 8 -

- 9 -

Wärmeeinwirkung eine Klebeverbindung zwischen der
Schicht und dem Bauteil hergestellt wird, dadurch gekennzeichnet, daß die Magnetisierung des magnetischen
Materials unmittelbar vor dem Aufbringen der Schicht (2)
auf das Bauteil erfolgt.

6) Schicht zur Verwendung bei einem Verfahren nach einem der
Ansprüche 1 bis 5 , dadurch gekennzeichnet, daß sie mit
einer magnetisierbares Material (3) enthaltenden Folie
(5) kaschiert ist.

7) Schicht zur Verwendung bei einem Verfahren nach einem der
Ansprüche 1 bis 5 , dadurch gekennzeichnet, daß sie mit
einer Heißkleberschicht (6) ausgerüstet ist und daß sich
das magnetisierbare Material (3) in der Heißkleberschicht
befindet.

8) Schicht und/oder Magnettisch zur Verwendung bei einem
Verfahren nach Anspruch 4, dadurch gekennzeichnet, daß die
Schicht (2) und/oder die Oberfläche des Magnettisches (1)
eine dem mit der Schicht auszurüstenden Bauteil entsprechende Form haben.

9 ) Verfahren zur Ausrüstung eines in seiner Form von der
Ebene abweichenden, eisenhaltigen Bauteiles mit einem Formteil, das im Bereich der dem Bauteil zugewandten Begrenzungsfläche magnetisierbares Material enthält, indem das
magnetisierbare Material magnetisiert wird, das Formteil
auf das Bauteil aufgebracht und durch die Magnetkraft gehaltert wird und anschließend durch Wärmeeinwirkung eine
Klebeverbindung zwischen dem Formteil und dem Bauteil hergestellt wird, dadurch gekennzeichnet, daß die Magnetisierung des magnetischen Materials unmittelbar vor dem
Aufbringen des Formteils (7) auf das Bauteil erfolgt.

10 ) Vorrichtung zur Magnetisierung des im Formteil enthaltenen
magnetisierbaren Materials, dadurch gekennzeichnet, daß
sie als Magnettisch mit einer dem Formteil (7) angepaßten
ebenen oder von der Ebene abweichenden Oberfläche ausgebildet ist.

0121919

FIG.1

FIG.2

FIG.3

FIG.4